# EUROPEAN PATENT SPECIFICATION

(11) **EP 1 254 580 B1**
(45) Date of publication and mention of the grant of the patent: **18.07.2012**
(21) Application number: 01942502.4
(22) Date of filing: 09.01.2001
(51) Int. Cl.: H04W 28/18

(54) **METHOD AND SYSTEM FOR EXCHANGE OF MULTICALL CAPABILITIES BETWEEN TERMINAL AND NETWORK**
VERFAHREN UND SYSTEM ZUM AUSTAUSCHEN VON MEHRFACHRUFESMÖGLIGKEITEN ZWICHEN ENDGERÄT UND NETZWERK
PROCEDE ET SYSTEME D'ECHANGE DE FONCTIONS A PLUSIEURS APPELS ENTRE UN TERMINAL ET UN RESEAU

(30) Priority: 10.01.2000 US 174908 P; 08.01.2001 US 755108
(43) Date of publication of application: 06.11.2002
(73) Proprietor: Telefonaktiebolaget LM Ericsson (publ), 164 83 Stockholm (SE)
(72) Inventor: BRUSS, Jörg, 52249 Eschweiler (DE)
(74) Representative: Tonscheidt, Andreas
(86) International application number: PCT/EP2001/000162
(87) International publication number: WO 2001/052583

(56) References cited:
- EP-A- 0 685 972
- WO-A-00/02350
- WO-A-00/27154
- WO-A-97/44922
- WO-A-98/26625
- WO-A-98/36605
- US-A- 5 386 512
- US-A- 5 412 375
- "Universal Mobile Telecommunications System (UMTS);Multicall;Service description;Stage 1;(3G TS 22.135 version 3.1.0 Release 1999" ETSI TS 122135 V3.1.0 (2000-01), January 2000 (2000-01), pages 1-15, XP002166935 france cited in the application

## Description

### Field of invention

The present invention relates to handling and signaling associated with multicall capability in radiocommunication systems.

### Description of prior art

Radiocommunication standards and systems continue to evolve at a fast pace in recent years. The so-called third generation networks are among the latest developments in this sector; one example of which is referred to as the Universal Mobile Telecommunication Systems (UMTS). These third generation networks enable subscribers to set up a variety of different user services, e.g., multimedia services, speech calls, data calls, fax calls, short messages, etc. Among other capabilities, third generation systems allow a subscriber to set up more than one call simultaneously, providing an individual radio bearer for each of the calls. This feature is called "Multicall" in UMTS specifications.

The Multicall feature enables a subscriber in a UMTS system to have, for instance, a speech connection while sending a fax, browsing the Internet, or performing data transmissions of any kind, as described in the 3GPP specification 3G TS 22.135 Version 3.0.0, published October 1999.

Furthermore, the feature provides the capability to increase the bandwidth for a certain type of connection beyond the limit given by a single bearer. This is done by performing an inverse multiplexing scheme to aggregate the bandwidth of several calls.

The Multicall feature interacts with other features specified in the UMTS standard, e.g., the supplementary services referred to as Call Waiting and Call Hold. The Call Waiting service permits a mobile subscriber to be notified of an incoming call while no other bearer is available to support the incoming call and the mobile subscriber is already engaged in at least one active or held call. Upon notification, the subscriber can either accept, reject, or ignore the incoming call.

The Call Hold service allows a served mobile subscriber, who is provisioned with this Supplementary Service, to interrupt communication on an existing active call and then subsequently, if desired, re-establish communication. The radio bearer remains assigned to the mobile subscriber after the communication is interrupted to allow the origination or possible termination of other calls. Consider the following interactions between the Multicall, Call Waiting and Call Hold features.

For a Multicall subscriber, the Call Waiting service is invoked when all bearers available for a certain subscriber are in use and an incoming call is received by the serving network entity or if a speech call is offered and another speech call is already ongoing for that subscriber. The serving network entity can, for example, be a Mobile services Switching Centre / Visitor Location Register (MSC/VLR) that performs the call control and requests the establishment of a call bearer for the subscriber. The number of available bearers depends on the maximum limit of bearers as defined in the Multicall subscription, the capabilities of the serving network entity, and the capabilities of the terminal.

For a Multicall subscriber, the Call Hold service is implicitly invoked when all bearers available for a certain subscriber are in use, one of the established calls is a speech call, and the subscriber wants to set up or accept a new call. This procedure is well known to those skilled in the art, for example as described in the 3GPP specification TS 22.030 Version 3.0.1, published October 1999. When this occurs, the speech call is put on hold, and the new call will use the bearer formerly used by the speech call. The number of available bearers in this context depends on the maximum limit of bearers as defined by limits set by the operator, limits set by the user, the capabilities of the serving network entities, and the capabilities of the terminal. In addition to the MSC/VLR mentioned above, the capabilities of the serving network in connection with the number of bearers available may also be limited by other nodes, e.g, the Radio Network Controller (RNC).

However, currently no mechanism exists to detect the actual limit for the number of bearers available to a Multicall subscriber. This shortcoming prevents backward compatible service behavior for second generation networks, e.g., GSM networks. The actual limit is the lowest number of bearers supported by the terminal, the network, the operator setting and the user setting. The number of bearers supported by the terminal, the network, the operator setting and the user setting may differ. This can cause a number of problems in the handling of calls made by GSM and/or UMTS equipment, particularly in hybrid GSM/UMTS equipment.

For example, if the maximum number of bearers supported by the terminal is higher than the maximum number of bearers supported by the serving network entity, the following problems can occur. Consider that, for a particular call incoming to the terminal, the serving network entity detects that the maximum number of bearers allowed by the multicall subscription of the called subscriber is already used. The serving network entity will then invoke the Call Waiting service. The call is then offered as a waiting call to the terminal. However, since the maximum number of bearers from the terminal point of view is not yet reached, it may request the serving network entity to allocate a new bearer for the waiting call, which bearer is not available.

Likewise, for calls which are to be setup from the terminal, this imbalance between the number of bearers available for the terminal versus the number of bearers available for the serving network entity can cause difficulties. Since the terminal perceives that at least one radio bearer is available for it to set up an outgoing call, the terminal does not implicitly invoke the Call Hold service for its ongoing Speech call prior to attempting call setup. In response to the call setup signalling, the network will detect that there is no bearer available. Since the speech call is not on hold, the serving network entity cannot re-use the bearer allocated for the speech call for the new call. The serving network entity will then reject the call set-up.

Problems may also occur for the reverse discrepancy, i.e., in the case that the maximum number of bearers supported by the terminal is lower than the number of bearers that can be offered by the network. When the serving network entity tries to set up a call to a terminal that is using all of its available bearers, it may not invoke the Call Waiting feature since, from the serving network entity's perspective, there is an available radio bearer to set up the call. Instead, the terminal may reject the call and the waiting call will not be offered to the subscriber.

Specification 3G TS 22.135 version 3.1.0 Release 1999 discloses multicall scenarios and requirements for UMTS phase 1 release 1999 in connection with the usage of several simultaneous bearers between a terminal and a network.

WO 00/27154 A1, published on 11.05.2000, discloses a telecommunications system comprising an arrangement for controlling a multicall over a transmission path between a telecommunications network and a subscriber terminal. The multicall configuration may have three different bearer configurations: Each call of the multicall has a dedicated bearer, or one bearer is shared by all calls of the multicall, or the multicall has both dedicated and shared bearers. Further, the user of the subscriber terminal may indicate to the network the Network Determined User Busy limit and change the NDUB limit during the call.

Accordingly, it would be desirable to provide systems and methods for handling the exchange of multicall capabilities in a manner which permitted Call Waiting and Call Hold to be performed in a manner that supports backward compatibility with second generation devices and handles potential imbalances between the number of bearers available for setting up calls between different nodes of radiocommunication systems.

### Summary of the invention

This is solved by the teaching of claims 1, 10, 12, 15, and 16.

It is advantageous to transmit multicall capability information from user equipment to network and to perform calculations within the network according to claim 1. By this, processor capacity in user equipment is saved.

Further advantageous is the transmission of multicall limit information to user equipment according to claim 1. By this limit information can be taken into account at the set up of a call originating in said user equipment, saving resources in the network and on the air interface.

Further advantageous is the sending of multicall capabilities from a radio network controller to a mobile services switching centre according to claim 10. By this calculations can be performed in the mobile services switching centre, usually performing call control functionality.

Especially advantageous is the transmission of multicall capabilites associated with a user equipment after a change in said multicall capabilites has occurred. By this, always the latest information about multicall capabilities of a user equipment can be taken into account.

Further advantageous embodiments of the invention can be derived from the dependant claims.

It is obj ect of the invention to provide a mechanism for the exchange of information regarding multicall capabilities.

It is a further object of the invention to provide a mechanism to determine the actual limit on the number of bearers available between a particular device and the network at a given time.

It is another object to use the actual limit on the number of bearers in order to ensure that the service interactions as seen by the user are backward compatible with second generation systems.

The involved system entities include the terminal, the serving network entity and the entity handling the radio resources.

This limit information can take a number of forms and vary according to exemplary embodiments of the present invention. For example, limit information associated with an involved system entity can be, for example, either at least one informational parameter available at the system entity regarding factors limiting the number of available bearers or an informational parameter available at the system entities regarding a most limiting factor.

The bearer limiting factors associated with terminal devices are, for example, introduced by the manufacturer of the terminal, and may include limitations introduced by the involved protocols, bandwidth restrictions on the involved interfaces, user settings, operator settings, etc.

The bearer limiting factors in the radio access network entity are, for example, introduced by the manufacturer of the radio access network entity, and may include limitations introduced by the involved protocols, bandwidth restrictions on the involved interfaces, operator settings, etc.

The limiting factors in the serving network entity are for example introduced by the manufacturer of the serving network entity, are limitations introduced by the involved protocols, bandwidth restrictions on the involved interfaces, user settings, operator settings, etc. User settings can for example be related to the active calls (never offer a further call when a call to or from a certain destination is in progress), the maximum number of bearers allowed by the user, the services in progress, etc. Operator settings can for example be related to a specific subscriber, a group of subscribers, a specific network entity, a group of network entities, and the terminal.

According to one exemplary embodiment of the present invention the involved entities provide a limit calculation unit with their bearer limit information. This limit calculation unit determines the actual limit on the number of available bearers for a given set of entities at a given time. This actual limit can then be returned to the involved entities and used to invoke multicall capabilities in a manner which prevents the afore-described problems.

According to one exemplary embodiment, the limit calculation unit is located in the serving network entity. The terminal and the radio access network entity inform the limit calculation unit in the serving network entity of their bearer limit information. As the limit information of the radio access network entity is not subject to frequent change, it can be mirrored in a RNC limits storage unit. This RNC limits storage unit can be located at the serving network entity and holds the limit information about all of the radio access network entities which are frequently or permanently in contact with a particular serving network entity MSC/VLR. Alternatively, the RNC limits storage unit can be placed as a stand-alone network entity that holds the limit information of all radio network entities. Furthermore, a combined approach of the before mentioned distributed or centralized schemes could be applied.

### Brief description of the drawings

These and other objects, features and advantages of the present invention will become more apparent upon reading from the following detailed description, taken in conjunction with the accompanying drawings, wherein:
FIG. 1 is a block diagram which depicts signalling between an RNC and MSC/VLR for informing the MSC/VLR of the RNC's bearer capabilities according to an exemplary embodiment of the present invention;
FIG. 2 is a block diagram which depicts signalling associated with the exchange of bearer information between user equipment and an MSC/VLR according to an exemplary embodiment of the present invention;
FIG.3 is a block diagram of selected functional units within user equipment according to an exemplary embodiment of the present invention;
FIG.4 is a flowchart depicting user equipment processing of a user call request according to an exemplary embodiment of the present invention;
FIG. 5 is a block diagram of selected functional units within an MSC/VLR according to an exemplary embodiment of the present invention;
FIG. 6 is a flowchart depicting MSC/VLR processing of an incoming call request according to an exemplary embodiment of the present invention;
FIG. 7 is a block diagram which depcits signalling associated with changes to bearer capabilities associated with user equipment according to another exemplary embodiment of the present invention;
FIG. 8 is a block diagram which depicts signalling associated with changes to bearer capabilities associated with network equipment according to another exemplary embodiment of the present invention and
FIG. 9 is a signaling/block diagram which depicts bearer capability signalling associated with relocation of user equipment according to still another exemplary embodiment of the present invention.

### Detailed description of embodiments

The various features of the invention will now be described with reference to the figures, in which like parts are identified with the same reference characters. In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments that depart from these specific details. In other instances, detailed descriptions of well-known methods, devices, and circuits are omitted so as not to obscure the description of the present invention.

Operation in accordance with GSM communication systems is described in, for example, European Telecommunication Standard Institute (ETSI) documents ETS 300 573, ETS 300 574 and ETS 300 578. Therefore, the operation of the GSM system is only described herein to the extent necessary for understanding the present invention. Similar standards related documents are also available for UMTS. Although, the present invention is described in terms of exemplary embodiments in a UMTS/GSM system, those skilled in the art will appreciate that the present invention may be applicable to other digital communication systems.

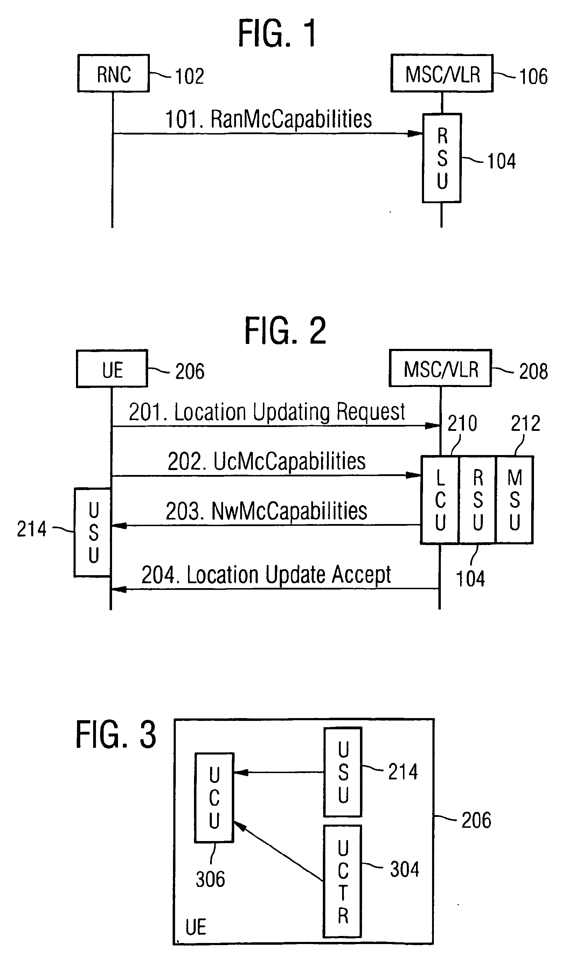

Referring now to Figure 1, as mentioned above, exemplary embodiments of the present invention contemplate the exchange of radio bearer limit information as a first part of a mechanism for handling multicall features in radiocommunication systems where entities may (or may not) be capable of handling multiple bearers simultaneously, the number of which may differ as between interacting entities. Therein, in a first step 101, the radio access network entity (RNC) 102 sends a RanMcCapabilities message to a radio network storage entity (RSU) 104 that includes the limit information available regarding the number of bearers which can be supported, e.g., per terminal, at the RNC 102. This action is triggered, when, for example, a software update, hardware update, a start or restart, or a change of operator settings takes place at the RNC 102. The radio network entity storage unit RSU 104 stores the received limit information for later usage as described below. As mentioned above, the RSU 104 can be physically located within MSC/VLR 106 or remotely therefrom but, in any case, has some mechanism for transferring information to the entity wherein bearer limit decisions are made.

Figure 2 depicts part of an exemplary UMTS network including a terminal (UE) 206, a serving network entity 208 and a limit calculation unit (LCU) 210 that is located, for example, in the MSC/VLR 208. The LCU 210 is, in this example, collocated together with the RSU 104. For the purposes of this portion of the discussion, consider that the RSU 104 has already received the limit information of the RNC 102 which is currently serving the UE 206.

In a first step 201, the terminal UE 206 performs a location updating request towards serving network entity MSC/VLR 208. This occurs, for example, during the initial local registration process, also known as IMSI (International Mobile Subscriber Identity) Attach, as well as for any subsequent location updating. In a next step 202, the terminal UE 206 sends a UeMcCapabilities message to the limit calculation unit LCU 210. This message includes the bearer limit information of the terminal UE 206. For the case where the terminal performs a location updating that involves change of serving network entity and for the case of an initial location registration, a Home Location Register (HLR, not shown) will provide the limit information as defined by the multicall subscription data. The serving network storage unit (MSU) 212 will store the limit information received from the Home Location Register. Therefore, for the other cases of locating updating, the limit information provided by Home Location Request is present in radio network entity storage unit RSU 104. Those skilled in the art will appreciate that the transmission of limit information from the UE 206 to the LCU 210 can occur during processes other than location updating, which is described here as one example. In general, limit information can be exchanged at any time before the interaction between Multicall and Call Hold or Multicall and Call Waiting should take place as described in the Background section above.

The limit calculation unit LCU 210 then calculates the actual limit, i.e., the largest number of bearers of any of the three involved entities, taking into account the limit information of the serving network entity MSC/VLR, the limit information of the involved radio access network entity stored in the serving network storage unit MSU and the limit information provided by the UE.

In a next step 203, the limit calculation unit LCU 210 returns the actual limit to the terminal UE 206 in a NwMcCapabilities message. The terminal UE 206 stores the actual bearer limit in the terminal storage unit USU 214. Furthermore, the actual limit is stored in a serving network entity storage unit MSU 212.

In another embodiment of the invention, the NwMcCapabilities message comprises information about the maximum number of bearers supported by the network. The terminal UE 206 processes the information together with information about the maximum number of bearer supported by itself.

In step 204, the serving network entity MSC/VLR 208 confirms the positive outcome of the location updating procedure by sending a Location Update Accept message to the terminal UE 206.

According to another exemplary embodiment of the present invention, the limit information of the terminal UE 206 can be transmitted in the Location Updating Request message itself, e.g., in an extension of an MS Classmark 2 Information Element. The MS Classmark 2 Information Element in the Location Updating Request message is well known to those person skilled in the art from the 3GPP TS 24.008 specification, section 10.5.1.6, version 3.2.1, released January 2000. The UeMcCapabilities message depicted in Figure 2 can, in this exemplary embodiment, then be omitted. The actual limit can also be returned as a parameter in the Location Update Accept message, in which case the NwMcCapabilities message depicted in Figure 2 can be omitted as well.

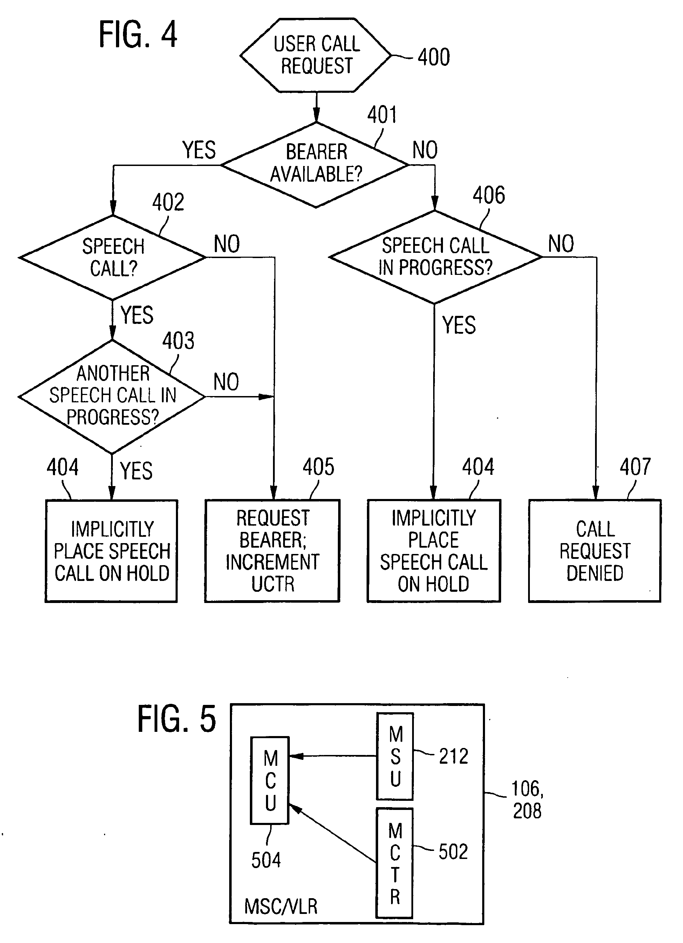

As shown in Figure 3, a terminal UE 206 according to exemplary embodiments of the present invention comprises a terminal storage unit USU 214, a terminal counter UCTR 304, and a terminal control unit UCU 306. The terminal storage unit USU 214 stores the actual limit calculated by the limit calculation unit LCU 210. Alternatively, the UE 206 may instead calculate the actual limit itself given its knowledge of the UE's limits as well as limit information for the network side that is transmitted thereto. Regardless of where the actual limit is calculated, the terminal counter UCTR 304 counts the number of bearers established for the subscriber and the type of the respective calls. The terminal control unit UCU 306 determines whether the Call Hold service should be implicitly invoked at a user request for call set-up, or whether the user request for call set-up involves the request for a bearer allocation. For this purpose, the terminal control unit UCU 306 processes the information provided by the terminal storage unit USU 214 and the information provided by the terminal counter UCTR 304. The processing by UCU 306 starts, for example, when the user requests a call set-up as depicted in the flowchart of Figure 4.

Therein, the UE processing starts with the user call request 400. In decision step 401 it is determined whether a bearer is available for the call request. A bearer is available if the number of bearers as counted by terminal counter UCTR 304 is lower than the actual limit as stored in the terminal storage unit USU 214. If the result of decision step 401 is that a further bearer is available, then the flow moves to decision step 402 where a check is performed as to whether the requested call is a speech call.

If the result of decision step 402 is that the requested call is not a speech call, e.g., it is for a data connection, then the flow moves to action 405 wherein a new bearer is requested and the terminal counter UCTR 304 is incremented. If, on the other hand, the result of decision step 402 is that the requested call is a speech call, then in decision step 403 it is determined whether another speech call is already in progress. If the result of decision step 403 is that a speech call is already in progress, then in action 404 the in progress speech call is implicitly put on hold. If the result of decision step 403 is that no speech call is in progress, then in action 405 a new bearer is requested and the terminal counter UCTR 306 is incremented.

If the result of decision step 401 is that no further bearer is available, i.e., if the number of bearers as counted by terminal counter UCTR 304 is equal to the actual limit as stored in the terminal storage unit USU 214, then in decision step 406 it is determined whether a speech call is in progress. If the result of decision step 406 is that a call of type speech is in progress, then in action 404 the speech call in progress is put implicitly on hold. If, on the other hand, the result of decision 406 is that no speech call is in progress, then in action 407 the call request is denied. The decisions made in steps 402, 403 and 406 can be influenced by user settings, e.g., conference calling, preferred numbers, etc.

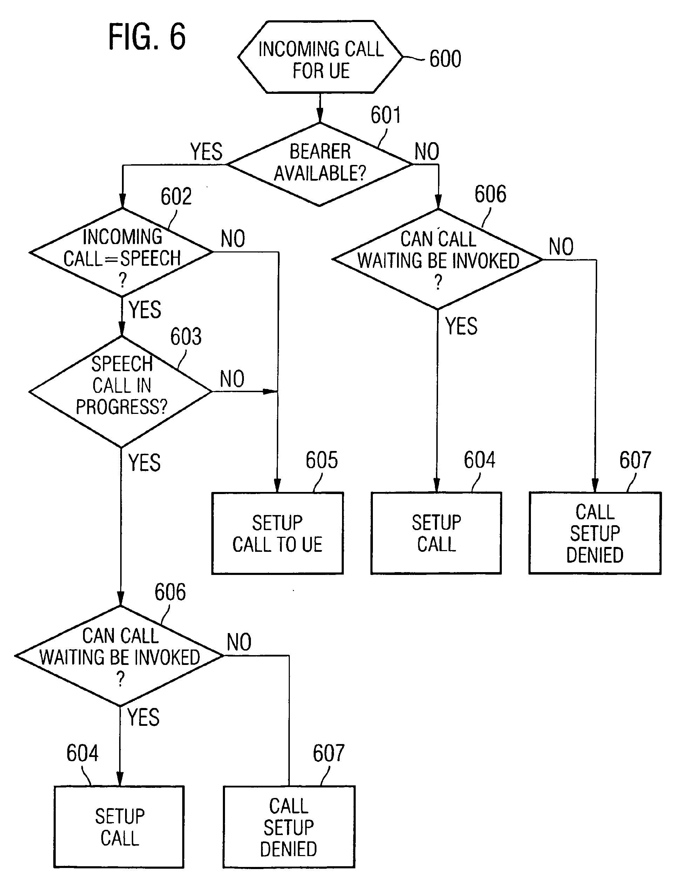

Referring now to Figure 5, therein a serving network entity MSC/VLR 106, 208 according to an exemplary embodiment of the present invention includes a serving network entity storage unit MSU 212, a serving network entity counter MCTR 502, and a serving network entity control unit MCU 504. The serving network entity storage unit MSU 212 stores the actual limit as calculated by the limit calculation unit LCU 210. The serving network entity counter MCTR 502 counts the number of bearers established for the subscriber. The serving network entity control unit MCU 504 determines whether the Call Waiting service should be invoked when an incoming call is received for the user, or whether the incoming call may involve the request for a bearer allocation. For this purpose, the serving network entity control unit MCU 504 processes the information provided by the serving network entity storage unit MSU 212 and the information provided by the a serving network entity counter MCTR 502. The processing starts, for example, when an incoming call is received for the user at the MSCNLR 106, 208 as depicted in the flowchart of Figure 6.

In figure 6, the processing starts with the incoming call at step 600. In decision step 601, it is determined whether a bearer is available for the call request. A bearer is available if the number of bearers as counted by serving mobile entity counter MCTR 502 is lower than the actual limit as stored in the serving mobile entity storage unit MSU 212. If the result of decision 601 is that a bearer is available, then, in decision step 602, the check is performed to determine whether the requested call is a speech call. If the result of decision step 602 is that the requested call is not a speech call, then in, action 605, the incoming call set up is performed towards the terminal UE 206. If the terminal UE 206 requests allocation of a new bearer for the call, a new bearer is allocated and the serving network entity counter MCTR 502 is incremented.

If the result of decision 602 is that the requested call is a speech call, then, in decision step 603 it is determined whether a speech call is in progress. If the result of decision step 603 is that a speech call is in progress, then, in decision step 606, it is further determined whether Call Waiting can be invoked for the subscriber.

If the result of decision step 606 is that Call Waiting can be invoked for the subscriber, then in action 604 the incoming call set-up is performed towards the terminal UE 206, indicating that it is a waiting call. Otherwise, if the result of decision step 606 is that Call Waiting can not be invoked for the subscriber, then in action 607 the incoming call set-up is denied.

If the result of decision step 603 is that no speech call is in progress, then, in action 605, the incoming call set up is performed towards the terminal UE 206. If the terminal UE 206 requests allocation of a new bearer for the call, a new bearer is allocated and the serving network entity counter MCTR 502 is incremented.

Returning to decision step 601, if the decision there is, instead, that no further bearer is available, then in decision 606 the check is performed whether Call Waiting can be invoked for the subscriber. If the result of decision step 606 is that Call Waiting can be invoked for the subscriber, then in action 604 the incoming call set-up is performed towards the terminal UE 206, indicating that it is a waiting call. Otherwise, if the result of decision step 606 is that Call Waiting can not be invoked for the subscriber, then in action 607 the incoming call set-up is denied. The decision steps 601 and 606 can be influenced by user settings and the decision step 601 can be influenced by operator settings, e.g., prioritizing calls (such as prioritizing a voice call over a data call).

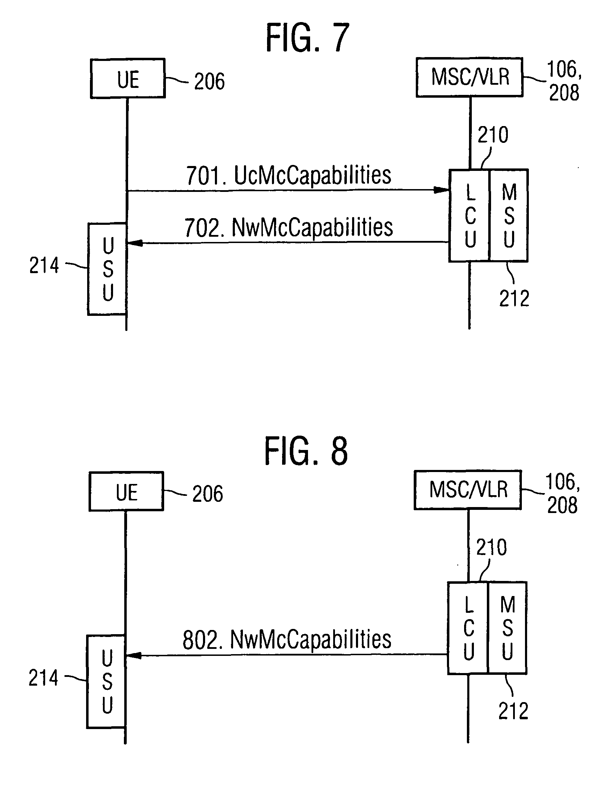

When a bearer limiting factor in the terminal changes, the terminal UE 206 informs the serving network entity MSC/VLR 106, 208 as depicted in Figure 7. Figure 7 depicts a block diagram which showing signalling associated with changes to bearer capabilities associated with user equipment according to another exemplary embodiment of the present invention. In a first step 701, the terminal UE206 sends a UeMcCapabilities message to the limit calculation unit LCU 210. This message includes the current (new) limit information of the terminal UE 206. The limit calculation unit LCU 210 calculates the new actual limit taking into account the actual limit information stored in the serving network entity storage unit MSU 212. The new actual limit is then stored in the serving network entity storage unit MSU 212. In a next step 702, the limit calculation unit LCU 210 returns the new actual limit to the terminal UE 206 in a NwMcCapabilities message.

In another embodiment of the invention, the NwMcCapabilities message comprises information about the maximum number of bearers supported by the network. The terminal UE 206 then calculates the actual limit the information together with information about the maximum number of bearer supported by itself. The terminal 206 stores the actual limit in the terminal storage unit USU 214.

When a limiting factor in the serving network entity changes the serving network entity MSC/VLR 106, 208 informs the terminal UE 206 as depicted in Figure 8. Therein, in a first step, the limit calculation unit LCU 210 calculates the new actual limit taking into account the actual limit information as stored in the serving network entity storage unit MSU 212. The new actual limit is then stored in a serving network entity storage unit MSU 212. In a next step 802, the limit calculation unit LCU 210 returns the actual limit to the terminal UE 206 in a NwMcCapabilities message.

In another embodiment of the invention, the NwMcCapabilities message comprises information about the maximum number of bearers supported by the network. The terminal UE 206 then calculates the actual limit the information together with information about the maximum number of bearer supported by itself. The terminal stores the actual limit in the terminal storage unit USU 214.

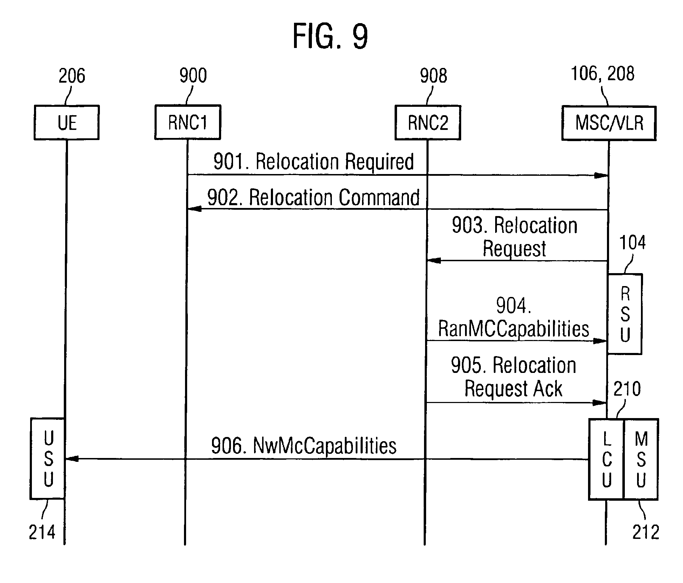

When a Relocation procedure takes place, i.e., a handoff which involves switching RNCs, the new RNC's bearer limiting factors may not be known to the serving network entity MSC/VLR 106, 208. The limiting factors of the new radio access network entity RNC are then sent to the serving network entity MSC/VLR 106, 208 as depicted in Figure 9.

Figure 9 depicts bearer capability signalling associated with relocation of user equipment according to still another exemplary embodiment of the present invention. At a first step 901, the current radio access network entity RNC1 900 requests a relocation procedure from the serving network entity MSC/VLR 106, 208 by sending a Relocation Required message. This message includes the information that the relocation is to be performed towards radio access network entity RNC2 908.

In a next step 902, the serving network entity MSC/VLR 106, 208, confirms the request of the radio access network entity RNC1 900. Then, at step 903, the serving network entity MSC/VLR 106, 208 requests the relocation from RNC2 908 by sending the Relocation Request message. At step 904, the radio access network entity RNC2 908 sends its own bearer limit information in a RanMcCapabilities message to the radio network entity storage unit RSU 104.

Then, at step 905, the radio access network entity RNC2 908 ends the relocation procedure by sending the Relocation Request Ack message to the serving network entity MSC/VLR 106,208. The limit calculation unit LCU 210 calculates (step 906) the new actual limit taking into account the new limit information in the radio network entity storage unit RSU 104, the actual limit stored in the serving network storage unit MSU and the limit associated with the UE. The new actual limit is stored in the serving network storage unit MSU 212. The limit calculation unit LCU 210 returns the actual limit to the terminal UE 206 in a NwMcCapabilities message.

In another embodiment of the invention, the NwMcCapabilities message comprises information about the maximum number of bearers supported by the network. The terminal UE 206 then calculates the actual limit the information together with information about the maximum number of bearer supported by itself. The terminal stores the actual limit in the terminal storage unit USU 214.

The functions described herein may, as will be apparent to those skilled in the art, be performed, at least in part, by way of software implemented on a computer-readable medium, to perform the afore-described techniques. The computer-readable medium may reside, for example, in any of the entities described herein and may also be found on portable computer-readable medium for the purpose of loading such software onto these entities.

Although the invention has been described in detail with reference only to a few exemplary embodiments, those skilled in the art will appreciate that various modifications can be made without departing from the invention. For example, the above-mentioned counters, i.e., the terminal counter UCTR and the serving network entity counter MCTR, may not be explicitly implemented as counters, but can also be derived from other data already available at the terminal UE and, respectively, the serving network entity MSC/VLR.

The terminal control unit UCU and the serving network entity control unit MCU and the limit calculation unit LCU can be implemented for example as integrated circuits or software modules. The limit calculation unit LCU may be implemented in any of the involved system entities or may be implemented as a stand-alone unit. Furthermore, each of the involved system entities may host a limit calculation unit LCU of its own for local computation of the actual limit. In such a case, instead of the actual limit, the limiting information is exchanged between the involved system entities.

The exchange of limit information may be initiated by one of the system entities by requiring the limit information from the other involved system entities. Alternatively, one of the system entities may initiate the exchange of limit information by sending its limit information to at least one of the involved system entities. Accordingly, the invention is defined only by the following claims.

## Claims

1. A method for exchanging multicall capabilities between user equipment (206) and a network in a radiocommunication system comprising the steps of:
receiving (201, 202), from said user equipment at said network, multicall capability information associated with said user equipment;
calculating, in said network, multicall limit information based on said multicall information associated with said user equipment and multicall information associated with said network; and
returning (203), to said user equipment, said multicall limit information.

2. A method according to claim 1, wherein said network includes a mobile switching center (106, 208) and a radio network controller (102), each of which perform functions associated with radiocommunication support of said user equipment, said method further comprising the steps of:
determining multicall capability information (101) associated with said radio network controller; and
using said multicall capability information associated with said radio network controller to calculate said multicall limit information.

3. A method according to claim 1 or 2, wherein said step of receiving comprises the step of:
receiving an indication of a maximum number of bearers supported by said user terminal.

4. A method according to any of the preceding claims, further comprising the step of:
storing said multicall limit information in a storage unit within said user equipment.

5. A method according to any of the preceding claims, further comprising the step of:
storing said multicall limit information in a storage unit within said network.

6. A method according to any of the preceding claims, wherein the storage of multicall limit information is in a storage unit within said network is performed during or after the transmission of a location updating request message.

7. A method according to any of the preceding claims, wherein
said multicall capability information is received as part of the transmission of a location updating request message.

8. A method according to any of the preceding claims, wherein said multicall capability information is included as an extension of a CLASSMARK 2 information element in said location updating request message.

9. A method according to any of the preceding claims, wherein multicall limit information is exchanged at a location update.

10. A method for informing a mobile switching center (106) of multicall capabilities associated with a radio network controller (102) in a radiocommunication system comprising the step of:
Receiving, from said radio network controller at said mobile switching center, an indication of said multicall capabilities associated with said radio network controller.

11. A method according to claim 10, wherein said step of receiving is triggered by at least one of: a software update, a hardware update, a start, a restart and a change of operator settings.

12. A terminal (206) comprising:
a storage unit for storing a maximum number of bearers which are currently usable by said terminal (214), wherein said maximum number of bearers is based on bearer limit information associated with said terminal and with a network;
a counter for counting a number of said bearers which are currently being used by said terminal (304); and
a control unit (306), connected to said storage unit and said counter, for selectively processing a call based upon said maximum number of bearers and said number of bearers which are currently being used.

13. A terminal according to claim 12, wherein said control unit selectively places an ongoing speech call on hold based upon said maximum number of bearers and said number of bearers which are currently being used.

14. A terminal according to claim 12 or 13, wherein said control unit selectively requests a bearer and increments said counter, or selectively denies a call request, based upon said maximum number of bearers and said number of bearers which are currently being used, and based on the type of call being requested and the type of call currently ongoing.

15. A mobile switching center (208, 106) usable in radiocommunication systems comprising:
a storage unit for storing a maximum number of bearers which can be used to support communications with a user equipment, wherein said maximum number of bearers is based on a bearer limit information associated with said user equipment and with said mobile switching center;
a counter to count a number of bearers currently being used to support communications with said user equipment; and
a control unit, connected to said storage unit and to said counter, to process an incoming call for said user equipment based on values stored in said storage unit and said counter.

16. A computer program, stored on a computer readable medium or adapted to being loaded into a memory of a computer, for implementing a method according to any of the claims 1 to 11.

## Patentansprüche

1. Verfahren zum Austauschen von Multicall-Fähigkeiten zwischen einer Benutzereinrichtung (206) und einem Netzwerk in einem Funkkommunikationssystem, umfassend die folgenden Schritte:
Empfangen (201, 202) am Netzwerk von Multicall-Fähigkeitsinformationen, die mit der Benutzereinrichtung assoziiert sind, von der Benutzereinrichtung;
Berechnen im Netzwerk von Multicall-Beschränkungsinformationen auf der Basis der Multicall-Informationen, die mit der Benutzereinrichtung assoziiert sind, und Multicall-Informationen, die mit dem Netzwerk assoziiert sind; und
Zurücksenden (203) der Multicall-Beschränkungsinformationen an die Benutzereinrichtung.

2. Verfahren nach Anspruch 1, wobei das Netzwerk eine Mobilfunkvermittlungsstelle (106, 208) und eine Funknetzsteuerung (102) umfasst, die jeweils Funktionen ausführen, die mit der Funkkommunikationsunterstützung der Benutzereinrichtung verbunden sind, wobei das Verfahren ferner die folgenden Schritte umfasst:
Bestimmen von Multicall-Fähigkeitsinformationen (101), die mit der Funknetzsteuerung assoziiert sind; und
Verwenden der Multicall-Fähigkeitsinformationen, die mit der Funknetzsteuerung assoziiert sind, um die Multicall-Beschränkungsinformationen zu berechnen.

3. Verfahren nach Anspruch 1 oder 2, wobei der Schritt des Empfangens den folgenden Schritt umfasst:
Empfangen einer Anzeige einer maximalen Anzahl von Trägern, die vom Benutzerendgerät unterstützt werden.

4. Verfahren nach einem der vorhergehenden Ansprüche, ferner umfassend den folgenden Schritt:
Speichern der Multicall-Beschränkungsinformationen in einer Speichereinheit innerhalb der Benutzereinrichtung.

5. Verfahren nach einem der vorhergehenden Ansprüche, ferner umfassend den folgenden Schritt:
Speichern der Multicall-Beschränkungsinformationen in einer Speichereinheit innerhalb des Netzwerks.

6. Verfahren nach einem der vorhergehenden Ansprüche, wobei die Speicherung von Multicall-Beschränkungsinformationen in einer Speichereinheit innerhalb des Netzes während oder nach der Übertragung einer Nachricht zur Anforderung einer Aufenthaltsaktualisierung durchgeführt wird.

7. Verfahren nach einem der vorhergehenden Ansprüche, wobei die Multicall-Fähigkeitsinformationen als Teil der Übertragung einer Nachricht zur Anforderung einer Aufenthaltsaktualisierung empfangen werden.

8. Verfahren nach einem der vorhergehenden Ansprüche, wobei die Multicall-Fähigkeitsinformationen als eine Erweiterung eines CLASSMARK 2-Informationselements in der Nachricht zur Anforderung der Aufenthaltsaktualisierung enthalten sind.

9. Verfahren nach einem der vorhergehenden Ansprüche, wobei die Multicall-Beschränkungsinformationen bei einer Aufenthaltsaktualisierung ausgetauscht werden.

10. Verfahren zum Informieren einer Mobilfunkvermittlungsstelle (106) über Multicall-Fähigkeiten, die mit einer Funknetzsteuerung (102) in einem Funkkommunikationssystem assoziiert sind, umfassend die folgenden Schritte:
Empfangen an der Mobilfunkvermittlungsstelle einer Anzeige der Multicall-Fähigkeiten, die mit der Funknetzsteuerung assoziiert sind, von der Funknetzsteuerung.

11. Verfahren nach Anspruch 10, wobei der Schritt des Empfangens durch mindestens eines von einer Software-Aktualisierung, einer Hardware-Aktualisierung, einem Start, einem Neustart und einer Änderung von Betreibereinstellungen ausgelöst wird.

12. Endgerät (206), umfassend:
eine Speichereinheit zum Speichern einer maximalen Anzahl von Trägern, die gegenwärtig vom Endgerät (214) verwendet werden können, wobei die maximale Anzahl von Trägern auf Trägerbeschränkungsinformationen basiert, die mit dem Endgerät und mit einem Netzwerk assoziiert sind;
einen Zähler zum Zählen einer Anzahl der Träger, welche gegenwärtig vom Endgerät (304) verwendet werden;
eine Steuereinheit (306), die mit der Speichereinheit und dem Zähler verbunden ist, zum selektiven Verarbeiten eines Anrufs auf der Basis der maximalen Anzahl von Trägern und der Anzahl von Trägern, die gegenwärtig verwendet werden.

13. Endgerät nach Anspruch 12, wobei die Steuereinheit einen bestehenden Sprachanruf auf der Basis der maximalen Anzahl von Trägern und der Anzahl von Trägern, die gegenwärtig verwendet werden, selektiv parkt.

14. Endgerät nach Anspruch 12 oder 13, wobei die Steuereinheit selektiv einen Träger anfordert und den Zähler inkrementiert oder eine Anrufanforderung auf der Basis der maximalen Anzahl von Trägern und der Anzahl von Trägern, die gegenwärtig verwendet werden, sowie auf der Basis der Art des Anrufs, der angefordert wird, und der Art des Anrufs, der gegenwärtig besteht, selektiv zurückweist.

15. Mobilfunkvermittlungsstelle (208, 106), die in Funkkommunikationssystemen verwendet werden kann und umfasst:
eine Speichereinheit zum Speichern einer maximalen Anzahl von Trägern, die verwendet werden können, um Kommunikationen mit einer Benutzereinrichtung zu unterstützen, wobei die maximale Anzahl von Trägern auf Trägerbeschränkungsinformationen basiert, die mit dem Endgerät und mit der Mobilfunkvermittlungsstelle assoziiert sind;
einen Zähler zum Zählen einer Anzahl von Trägern, die gegenwärtig verwendet werden, um Kommunikationen mit der Benutzereinrichtung zu unterstützen; und
eine Steuereinheit, die mit der Speichereinheit und dem Zähler verbunden ist, um einen eingehenden Anruf für die Benutzereinrichtung auf der Basis von Werten zu verarbeiten, die in der Speichereinheit und dem Zähler gespeichert sind.

16. Computerprogramm, das auf einem computerlesbaren Medium gespeichert ist oder in einen Speicher eines Computers geladen werden kann, zum Implementieren eines Verfahrens nach einem der Ansprüche 1 bis 11.

## Revendications

1. Procédé d'échange de capacités multi-appels entre un équipement d'utilisateur (206) et un réseau dans un système de radiocommunication comprenant les étapes consistant à :
recevoir (201,202), depuis ledit équipement d'utilisateur au niveau dudit réseau, une information de capacité multi-appels associée audit équipement d'utilisateur ;
calculer, dans ledit réseau, une information de limite multi-appels sur la base de ladite information multi-appels associée audit équipement d'utilisateur et de l'information multi-appels associée audit réseau ; et
renvoyer (203), audit équipement d'utilisateur, ladite information de limite multi-appels.

2. Procédé selon la revendication 1, dans lequel ledit réseau inclut un centre de commutation pour les services mobiles (106,208) et un contrôleur de radioréseau (102), dont chacun exécutent des fonctions associées à la prise en charge de radiocommunications dudit équipement d'utilisateur, ledit procédé comprenant en outre les étapes consistant à :
déterminer une information de capacité multi-appels (101) associée audit contrôleur de radioréseau ; et
utiliser ladite information de capacité multi-appels associée audit contrôleur de radioréseau pour calculer ladite information de limite multi-appels.

3. Procédé selon la revendication 1 ou 2, dans lequel l'étape de réception comprend l'étape consistant à :
recevoir une indication d'un nombre maximal de supports pris en charge par ledit terminal d'utilisateur.

4. Procédé selon une quelconque des revendications précédentes, comprenant en outre l'étape consistant à :
mémoriser ladite information de limite multi-appels dans une unité de mémorisation à l'intérieur dudit équipement d'utilisateur.

5. Procédé selon une quelconque des revendications précédentes, comprenant en outre l'étape consistant à :
mémoriser ladite information de limite multi-appels dans une unité de mémorisation à l'intérieur dudit réseau.

6. Procédé selon une quelconque des revendications précédentes, dans lequel la mémorisation de l'information de limite multi-appels dans une unité de mémorisation à l'intérieur dudit réseau est effectuée pendant ou après la transmission d'un message de demande de mise à jour de localisation.

7. Procédé selon une quelconque des revendications précédentes, dans lequel ladite information de capacité multi-appels est reçue en tant que partie de la transmission d'un message de demande de mise à jour de localisation.

8. Procédé selon une quelconque des revendications précédentes, dans lequel ladite information de capacité multi-appels est incluse comme une extension d'un élément d'information CLASSMARK 2 dans ledit message de demande de mise à jour de localisation.

9. Procédé selon une quelconque des revendications précédentes, dans lequel une information de limite multi-appels est échangée à une mise à jour de localisation.

10. Procédé d'information d'un centre de commutation pour les services mobiles (106) au sujet des capacités multi-appels associées à un contrôleur de radioréseau (102) dans un système de radiocommunication comprenant l'étape consistant à :
recevoir, depuis ledit contrôleur de radioréseau au niveau dudit centre de commutation pour les services mobiles, une indication desdites capacités multi-appels associées audit contrôleur de radioréseau.

11. Procédé selon la revendication 10, dans lequel ladite étape de réception est déclenchée par au moins un de : une mise à jour de logiciel, une mise à jour de matériel, un démarrage, un redémarrage et un changement de paramètres d'opérateur.

12. Terminal (206) comprenant :
une unité de mémorisation pour mémoriser un nombre maximal de supports qui sont actuellement utilisables par ledit terminal (214), dans lequel ledit nombre maximal de supports est basé sur l'information de limite de support associée audit terminal et à un réseau ;
un compteur pour compter un nombre desdits supports qui sont actuellement en cours d'utilisation par ledit terminal (304) ; et
une unité de commande (306), connectée à ladite unité de mémorisation et audit compteur, pour traiter sélectivement un appel sur la base dudit nombre maximal de supports et dudit nombre de supports qui sont actuellement en cours d'utilisation.

13. Terminal selon la revendication 12, dans lequel ladite unité de commande met en attente un appel vocal en cours sur la base dudit nombre maximal de supports et dudit nombre de supports qui sont actuellement en cours d'utilisation.

14. Terminal selon la revendication 12 ou 13, dans lequel ladite unité de commande demande sélectivement un support et incrémente ledit compteur, ou refuse sélectivement une demande d'appel, sur la base dudit nombre maximal de supports et dudit nombre de supports qui sont actuellement en cours d'utilisation, et sur la base du type d'appel étant demandé et du type d'appel actuellement en cours.

15. Centre de commutation pour les services mobiles (208,106) utilisable dans des systèmes de radiocommunication comprenant :
une unité de mémorisation pour mémoriser un nombre maximal de supports qui peuvent être utilisés pour prendre en charge des communications avec un équipement d'utilisateur, dans lequel ledit nombre maximal de supports est basé sur une information de limite de support associée audit équipement d'utilisateur et audit centre de commutation pour les services mobiles ;
un compteur pour compter un nombre de supports étant actuellement en cours d'utilisation pour prendre en charge des communications avec ledit équipement d'utilisateur ; et
une unité de commande, connectée à ladite unité de mémorisation et audit compteur, pour traiter un appel entrant pour ledit équipement d'utilisateur sur la base des valeurs mémorisées dans ladite unité de mémorisation et ledit compteur.

16. Programme informatique, mémorisé sur un support lisible par ordinateur ou adapté afin d'être chargé dans une mémoire d'un ordinateur, pour implémenter un procédé selon une quelconque des revendications 1 à 11.
